# EUROPEAN PATENT SPECIFICATION

(11) **EP 2 175 739 B1**
(45) Date of publication and mention of the grant of the patent: **01.01.2014**
(21) Application number: 08773433.1
(22) Date of filing: 13.06.2008
(51) Int. Cl.: A23C 19/082, A23C 19/097

(54) **METHOD OF MAKING CHEESE**
VERFAHREN ZUR HERSTELLUNG VON KÄSE
PROCÉDÉ DE FABRICATION DE FROMAGE

(30) Priority: 15.06.2007 EP 07011770
(43) Date of publication of application: 21.04.2010
(73) Proprietor: Invensys APV A/S, 8600 Silkeborg (DK)
(72) Inventor: THORSEN, Claus, DK-8600 Silkeborg (DK); HARBO, Erik, Dath, DK-8210 Aarhus V (DK)
(74) Representative: Nordic Patent Service A/S
(86) International application number: PCT/EP2008/004777
(87) International publication number: WO 2008/151820

(56) References cited:
- EP-A- 0 997 073
- EP-A- 1 576 886
- WO-A-91/02461
- WO-A-2006/030128
- DATABASE WPI Week 200582 Thomson Scientific, London, GB; AN 2005-798871 XP002467736 & CN 1 644 071 A (LUO C) 27 July 2005 (2005-07-27)

## Description

The present invention relates to a method of making cheese in accordance with claim 1.

The paste-like emulsified homogenous pre-cheese mixture is to be used for making a traditional ripened cheese.

WO 2006/030128 A1 discloses a method of making cheese in accordance with the preamble of claim 1.

The method of making cheese as known form WO 2006/030128 A1 is directed to using dairy powder instead of milk for making a traditional ripened cheese. The use of dairy powder instead of milk has the advantage that the method is independent of local raw milk availability. Furthermore there is no whey as a by-product of the cheese making.

This known method provides a continuous cheese process instead of the traditional batch cheese process. This is a time saving way of making cheese because of the continuous cheese making method.

Compared to the traditional cheese making methods, the method known from WO 2006/030128 A1 provides a space saving process line because the known method is running on the basis of cheese concentrate and not on raw milk as traditional methods of making cheese.

Compared to the traditional cheese making methods, the energy needed for performing the known method based on dairy powders instead of raw milk is reduced. For instance the pasteurising line capacity will only be 1/10 of a traditional cheese milk pasteurising line. It is clear, that the same proportional reduction of energy will be obtained.

Compared to traditional cheese making methods, another advantage is that the method is more hygienic and safe because according to the known method the process line can be provided as a closed process line whereas traditional cheese making lines are normally more open.

Compared to traditional cheese making methods, the method of this prior art is more simple, because the following equipment may be omitted in a cheese making apparatus: the cheese vat, the cheese whey first drain, the cheese whey second drain, a cutting device for cutting the cheese curd, a device for treating raw milk, and/or cheese pressing equipment.

However the known method has the disadvantage that the obtained pre-cheese mixture is dull grey and unstable to subsequent heat treatment used for pasteurisation or sterilisation.

Accordingly it is an object of the invention to provide a method of making cheese based on dairy powders which provides a more attractive white pre-cheese mixture which is stable to pasteurisation or sterilisation without separation.

This object is achieved with the features of the independent claims. Preferred embodiments of the invention are disclosed in the dependent claims.

According to the invention there is provided a method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer, wherein
step (b) and/or step (c) are performed until a paste-like emulsified homogenous pre-cheese mixture is obtained,
characterised in that step (b) and/or step (c) are performed at a temperature between 60°C and 85°C and at a shear rate of more than about 5,000/sec.
- step (b) and/or step (c) are performed at a shear rate of more than about 5,000/sec, preferably at a shear rate of more than about 7,500/sec, and more preferably at a shear rate of about 10,000/sec, and/or
- step (b) and/or step (c) are preferably performed at a shear rate of less than about 40,000/sec, preferably at a shear rate of less than about 20,000/sec, and more preferably at a shear rate of about 10,000/sec, and/or
- step (b) and/or step (c) are preferably performed until a phase conversion of the content of the solid-liquid mixer takes place, and/or
- in step (b) and/or step (c) the temperature is preferably raised until a phase conversion of the content of the solid-liquid mixer takes place, and/or
- step (b) and/or step (c) are preferably performed until an increase of the viscosity of the contents of the solid-liquid mixer is detected and/or the colour of the contents of the solid-liquid mixer turns white.

The method in accordance with the invention has the advantage, that a very stable pre-cheese mixture is obtained. The best results are obtained by applying a temperature of at least 60°C and high shear rates of at least 5,000/sec. Surprisingly it has been discovered that no phase separation takes place even in case high temperature treatments are made thereafter, like sterilisation etc..

It has surprisingly been noted that a phase conversion takes place at a temperature of about 60°C, especially when a high shear rate, for instance of about 10,000/sec is applied. After the phase conversion has taken place the temperature can stay on its temperature or raised to a higher temperature without risking a phase separation.

If the phase conversion takes place, the viscosity of the pre-cheese mixture increases dramatically. The increased viscosity can be easily detected. For instance a higher energy demand of the mixer is due to the increased viscosity. Therefore, the increased viscosity of the contents of the mixer and the higher energy demand is an indication that a phase conversion has taken place.

In accordance with the present invention step (b) and/or step (c) can be performed at a temperature between 62°C and 80°C, preferably at a temperature between 64°C and 77°C, more preferable at a temperature between 65°C, and 75°C, more preferable at a temperature between 67°C and 73°C, and most preferred at a temperature between 68°C and 72°C.

In accordance with the present invention in step (b) the temperature can be increased to the temperature of step (b) after an initial mixing has taken place.

In accordance with the present invention step (b) and/or step (c) can be performed for at least 10 Minutes, preferably for at least 20 Minutes and most preferred for about 30 Minutes.

In accordance with the present invention step (b) and/or step (c) can be performed until the cheese base turns white and there is a marked increase in viscosity, as evidenced by an increase in power consumption of the mixer.

Step (b) and/or step (c) can be performed for less than about 60 Minutes, preferably less than about 45 Minutes and most preferred for about 30 Minutes.

In step (c) the vacuum can be applied to the head space of the mixer with the powder being introduced below the level of the liquid in the mixer. This prevents powder being sucked out by the vacuum.

In step (c) a low-pressure or vacuum of less than about 2 mbar, preferably less than about 1 mbar and more preferably of about 0.5 mbar can be applied.

Step (c) are performed at least partially simultaneously, simultaneously or one after the other.

In accordance with the present invention the paste-like emulsified homogenous pre-cheese mixture can be pasteurised. The pasteurisation can be performed in step (b) and/or step (c) and thereafter. If the pasteurisation is performed in step (b), the temperature is preferably raised to a first temperature, for instance 60°C, until the phase conversion takes place, and thereafter raised to a second temperature, for instance 65°C, where the pasteurisation takes place.

In the cheese production the milk is pasteurised, i.e. heated instantaneously to 68-73°C to kill bacteria that can destroy the cheese quality otherwise without affecting the ability of the casein to coagulate. The skilled person knows that temperatures in excess of 73°C cannot be applied, as it causes so considerable changes in the conditions of the milk protein, that the production of good-quality cheese is impossible.

During pasteurisation, vegetative bacteria are killed. However the spores of the bacteria are heat resistant and will not be killed by the temperatures pasteurisation is performed at. Butyric acid bacteria and other types of such bacteria can be detrimental for the fermentation of cheese. Accordingly it will be advantageous to eliminate the spores also from the pre-cheese mixture. For milk this is normally made by means of a mechanical separation or through the use of a membrane process described as microfiltration. Due to the higher density of spores it is possible to eliminate the spores from the milk using a centrifuge. However this separation method cannot be performed with the pasty-like pre-cheese mixture because of its high viscosity. Similarly, the use of microfiltration is not possible.

Accordingly a method for making cheese wherein a better microbiological cheese quality is described.

Also disclosed is a method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer, wherein step (b) and/or step (c) are performed until a paste-like emulsified homogenous pre-cheese mixture is obtained, and
(d) sterilising the paste-like emulsified homogenous pre-cheese mixture.

The paste-like emulsified homogenous pre-cheese mixture can be heated in step (d) at a temperature of more than about 120°C, preferably more than about 130°C, and more preferably at a temperature of about 140°C.

The paste-like emulsified homogenous pre-cheese mixture can be sterilised in step (d) for more than about 1 second, preferably for more than about 2 seconds, and more preferably for about 3 seconds.

The paste-like emulsified homogenous pre-cheese mixture can be sterilised in step (d) for than less 5 seconds, preferably for less than about 4 seconds, and more preferably for about 3 seconds.

In step (d) steam infusion heating can be used for heating of the paste-like emulsified homogenous pre-cheese mixture.

In step (d) the paste-like emulsified homogenous pre-cheese mixture can be preheated to a first heat treatment temperature and then heated to the final heat treatment temperature.

The final heat treatment temperature can be a temperature of more than about 120°C, preferably more than about 130°C, and more preferably a temperature of about 140°C.

The first heat treatment temperature can be a temperature of more than 75°C, preferable more than 80°C and more preferably of about 85°C.

The first heat treatment temperature can be a temperature of less than 95°C, preferable less than 90°C and more preferably of about 85°C.

In step (d) the paste-like emulsified homogenous pre-cheese mixture can be preheated by means of a surface heat exchanger, preferably by means of a scraped surface heat exchanger.

In step (d) the paste-like emulsified homogenous pre-cheese mixture can be heated to the final heat treatment temperature by means of steam infusion heating. There is the advantage, that despite the high temperatures a gentle heat treatment can be performed because the intended temperature can be achieved in a very short time.

It has been surprisingly discovered that due to this gentle heat treatment by means of steam infusion a sterilisation of the paste-like emulsified homogenous pre-cheese mixture can be obtained and that the sterilised pre-cheese mixture can be used to make a traditionally ripened cheese with a better microbiological cheese quality.

The method can also comprise the following step:
(e) cooling the heat treated paste-like emulsified homogenous pre-cheese mixture after step (d).

In step (e) the paste-like emulsified homogenous pre-cheese mixture can be cooled by means of a heat exchanger, preferably by means of a scraped surface heat exchanger or flash cooled by means of the vacuum vessel of an infusion plant.

In step (e) the temperature of the paste-like emulsified homogenous pre-cheese mixture can be cooled down to a temperature of less than about 45°C, preferably less than about 40°C.

In step (e) the paste-like emulsified homogenous pre-cheese mixture can be cooled to a first cooling temperature and then cooled to a final cooling temperature.

The final cooling temperature can be a temperature of less than about 45°C, preferably less than about 40°C.

The first cooling temperature can be a temperature of more than 75°C, preferable more than 80°C and more preferably of about 85°C.

The first cooling temperature is a temperature of less than 95°C, preferable less than 90°C and more preferably of about 85°C.

In step (e) the heat treated paste-like emulsified homogenous pre-cheese mixture can be cooled down to the first cooling temperature by means of flash cooling, preferably by means of a flash vessel operated under vacuum.

In step (e) the heat treated paste-like emulsified homogenous pre-cheese mixture can be cooled down to the final cooling temperature by means of a heat exchanger, preferably by means of a scraped surface heat exchanger..

The method can also comprise the following step:
(f) adding production aids to the cooled paste-like emulsified homogenous pre-cheese mixture after step (e) and/or step (d).

The production aids can comprise acidifying agents, fermenting agents and/or coagulating enzymes.

The production aids can comprise acids, preferably beta glucono-lactone.

The production aids can comprise mesophilic fermenting agents and/or thermophilic fermenting agents, preferably of the genus of Lactobacillus and/or Streptococcus.

The production aids comprise a coagulating agent such as bovine or microbial rennet.

Adding production aids can be stopped before a break, preferably stopped at least for a period of time it takes the paste-like emulsified homogenous pre-cheese mixture to pass from the portion of the mixer where the production aids are added to the exit of the mixer. This provides the advantage, that no coagulation of the pre-cheese mixture will take place, because all pre-cheese mixture comprising production aids have been removed from the apparatus.

The paste-like emulsified homogenous pre-cheese mixture exiting the mixer can be recirculated into the solid-liquid mixer of step (a) if the method is to be continued after a break, preferably recirculated at least for a period of time it takes the paste-like emulsified homogenous pre-cheese mixture to pass from the portion of the mixer where the production aids are added to the exit of the mixer. This provides the advantage that the pre-cheese mixture exiting the apparatus but not having production aids added can be reused and does not have to be discharged.

The method can also comprise the following step:
(g) producing cheese using the paste-like emulsified homogenous pre-cheese mixture of step (c), step (d), step (e) and/or step (f).

Step (g) can include moulding, incubation, pressing, salting, ripening, removing the cheese from the mould or other steps known from the traditional way of making cheese.

The paste-like emulsified homogenous pre-cheese mixture can have a dry matter content of 40 to 65% by weight and preferably 51-55% by weight.

The paste-like emulsified homogenous pre-cheese mixture can comprise butyric acid fat, cream and/or vegetable fat.

The powders containing whey protein and lactose-reduced dairy protein concentrates can have a lactose content of less than about 10% by weight.

The powders containing whey protein and lactose-reduced dairy protein concentrates can have a native, non-denatured protein content of more than about 65% by weight.

The powders containing whey protein and lactose-reduced dairy protein concentrates can when mixed have a resultant casein content of more than about 80% of total solids by proteins, preferably between 85 and 92% of total solids by proteins.

The powders containing whey protein and lactose-reduced dairy protein concentrates and/or the paste-like emulsified homogenous pre-cheese mixture can have a casein to whey protein ratio of at least 85:15, preferably of at least 90:10 and most preferred of about 98:2 and/or a casein to whey protein ratio corresponding to that of traditional cheese.

The total solid content of the paste-like emulsified homogenous pre-cheese mixture can be at least 40%, preferably at least 50% and most preferred about 55%.

The total solid content of the paste-like emulsified homogenous pre-cheese mixture after flash cooling using an infusion plant can be about 65%.

Also disclosed is a cheese making apparatus comprising a solid-liquid mixer and sterilisation means.

The sterilisation means can comprise a steam infusion heating device.

Also disclosed is a cheese making apparatus comprising a solid-liquid mixer and heating means, characterised in that the heating means include a steam infusion heating device.

Other characteristics and advantages will become clear from the following detailed description of exemplary embodiments in accordance with the invention.

The solid-liquid mixer used can be any mixer capable of mixing solids with liquids at the desired temperature and shear rate. For instance the FLEX-MIX PROCESSOR of Invensys APV may be used, preferably with the high shear rate impeller. The mixer should have sufficient power in order to provide a shear rate of at least 5,000/sec, preferable of at least 10,000/sec. There may be vacuum means for applying low pressure or vacuum at the head space of the solid-liquid mixer.

After the solid-liquid mixer there is preferably an in-line mixer. For instance the DAR mixer of Invensys APV may be used. A dosing pump is provided for dosing production aids (for instance rennet and starter) into the pre-cheese paste entering into the in-line mixer. The in-line mixer is provided for thoroughly mixing the production aids into the pre-cheese paste.

If pasteurisation of the pre-cheese mixture is desired, for instance a scraped surface heat exchanger may be used, being preferably connected between the solid-liquid mixer and the in-line mixer.

If sterilisation of the pre-cheese mixture is desired, for instance an infusion heating device, preferably in combination with a heat exchanger, for instance a scraped heat exchanger may be used, being preferably connected between the solid-liquid mixer and the in-line mixer.

The pre-cheese mixture exiting the in-line mixer preferably comprises dry matter content of 40 to 65%, and preferably of 55% by weight.

The casein to whey protein ratio of the pre-cheese mixture corresponds to the casein to whey protein ratio of the final cheese. Clearly, it is intended that the casein to whey protein ratio shall be the similar or slightly lower as for traditional cheese.

Form the exit of the in-line mixer the pre-cheese mixture is filled into moulds and treated as traditional cheese with the exception that no mechanical pressing is required. The skilled person is aware of these techniques.

As production aids coagulation enzymes (for instance rennet) and/or a chemical acidulant such as glucono-lactone may be added.

The sterilisation and/or heat treatment step may be carried out at a minimum temperature of 130°C, for instance for at least 3 seconds, or may utilise an equivalent treatment.

The pre-cheese mixture exiting the in-line mixer normally having a high viscosity, such that the pre-cheese mixture can directly been moulded into moulds or receptacles normally used by the skilled person for further treatment such as ripening etc..

In the moulds the pre-cheese mixture will coagulate because of the added production aids such as rennet.

To complete the coagulation and acidification, preferably an incubation step is following the step of moulding the pre-cheese mixture. During this step the cheeses are in their moulds and incubation takes place at a temperature of 28 to 31°C and a hygrometry rate of 99 to 100% for a period of time which can vary from a few hours to 20 hours, until a pH is obtained in the order of 5.3 to 4.8.

It will be possible to mould and directly portion cheeses in any desired shape and/or size. This technology enables a wide variety of unusual cheese shapes to be obtained owing to the removal of mechanical pressing.

After the incubation step has been completed, the cheeses are removed from the moulds and further steps may be performed the skilled person is aware of, for instance salting (in brine or using dry salt) and/or any treatments for obtaining rinds and/or special flavours etc..

If desired, other standard cheese-making techniques may be performed the skilled person is aware of.

The cheese obtained in accordance with the method of the invention are almost identical to traditionally produced cheeses. However the cheeses are obtained by using powder instead of raw milk. Accordingly the production of cheese is very easy. Especially there is no need of remove any by-products as it is necessary in the traditional method for producing cheese.

In principle any variety of semi-hard or hard cheese analogue can be produced with the method of the present invention.

It is clear that the description of the specific embodiments of the invention is not to be intended to limit the scope of protection which is defined by the claims.

## Claims

1. Method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer,
wherein step (b) and/or step (c) are performed until a paste-like emulsified homogenous pre-cheese mixture is obtained,
**characterised in that** step (b) and/or step (c) are performed at a temperature between 60°C and 85°C and at a shear rate of more than about 5,000/sec.

2. Method according to claim 1, **characterised in that** step (b) and/or step (c) are performed at a temperature between 62°C and 80°C, preferably at a temperature between 64°C and 77°C, more preferable at a temperature between 65°C and 75°C, more preferable at a temperature between 67°C and 73°C, and most preferred at a temperature between 68°C and 72°C.

3. Method according to any of the preceding claims, **characterised in that** in step (b) the temperature is increased to the temperature of step (b) after an initial mixing has taken place.

4. Method according to any of the preceding claims, **characterised in that** the paste-like emulsified homogenous pre-cheese mixture is pasteurised.

5. Method according to any of the preceding claims, **characterised in that** step (b) and/or step (c) are performed at a shear rate of more than about 7, 500/sec, and/or
**characterised in that** step (b) and/or step (c) are performed at a shear rate of less than about 40,000/sec, preferably at a shear rate of less than about 20,000/sec, and more preferably at a shear rate of about 10,000/sec.

6. Method according to any of the preceding claims, **characterised in that** step (b) and/or step (c) are performed and/or the temperature is raised until a phase conversion of the content of the solid-liquid mixer takes place.

7. Method according to any of the preceding claims, **characterised in that** step (b) and/or step (c) are performed for at least 10 Minutes, preferably for at least 20 Minutes and most preferred for about 30 Minutes.

8. Method according to any of the preceding claims, **characterised in that** step (b) and/or step (c) are performed until the cheese base turns white and there is a marked increase in viscosity, as evidenced by an increase in power consumption of the mixer.

9. Method according to any of the preceding claims, **characterised by**:
(d) sterilising the paste-like emulsified homogenous pre-cheese mixture.

10. Method according to claim 9, **characterised in that** the paste-like emulsified homogenous pre-cheese mixture is heated in step (d) at a temperature of more than about 120°C, preferably more than about 130°C, and more preferably at a temperature of about 140°C.

11. Method according to claim 9 or 10, **characterised in that** in step (d) the paste-like emulsified homogenous pre-cheese mixture is preheated to a first heat treatment temperature and then heated to the final heat treatment temperature.

12. Method according to claim 11, **characterised in that** the final heat treatment temperature is a temperature of more than about 120°C, preferably more than about 130°C, and more preferably a temperature of about 140°C, and/or
**characterised in that** the first heat treatment temperature is a temperature of more than 75°C, preferable more than 80°C and more preferably of about 85°C, and/or
**characterised in that** the first heat treatment temperature is a temperature of less than 95°C, preferable less than 90°C and more preferably of about 85°C.

13. Method according to claims 11 or 12, **characterised in that** in step (d) the paste-like emulsified homogenous pre-cheese mixture is preheated by means of a surface heat exchanger, preferably by means of a scraped surface heat exchanger.

14. Method according to claims 9-13, **characterised by**:
(e) cooling the heat treated paste-like emulsified homogenous pre-cheese mixture after step (d).

15. Method according to claim 14, **characterised in that** in step (e) the paste-like emulsified homogenous pre-cheese mixture is cooled by means of a heat exchanger, preferably by means of a scraped surface heat exchanger or flash cooled by means of the vacuum vessel of an infusion plant.

## Patentansprüche

1. Verfahren zur Herstellung von Käse, das die folgenden Schritte umfasst:
(a) Bereitstellen von Wasser, Fett und Pulvern, die Molkeprotein- und Lacton-reduzierte Milchproteinkonzentrate enthalten, in einem Flüssigkeit-Feststoff-Mischer,
(b) Emulgieren und Homogenisieren des Inhalts des Flüssigkeit-Feststoff-Mischers,
(c) Anlegen von Niedrigdruck oder Vakuum an das Innere des Mischers,
wobei Schritt (b) und/oder Schritt (c) solange durchgeführt werden, bis ein breiartiges emulgiertes homogenes Vorkäsegemisch erhalten wird,
**dadurch gekennzeichnet, dass** Schritt (b) und/oder Schritt (c) bei einer Temperatur zwischen 60°C und 85°C und bei einer Schergeschwindigkeit von mehr als etwa 5000/sec durchgeführt werden.

2. Verfahren nach Anspruch 1, **dadurch gekennzeichnet, dass** Schritt (b) und/oder Schritt (c) bei einer Temperatur zwischen 62°C und 80°C, vorzugsweise bei einer Temperatur zwischen 64°C und 77°C, besonders bevorzugt bei einer Temperatur zwischen 65°C und 75°C, besonders bevorzugt bei einer Temperatur zwischen 67°C und 73°C und insbesondere bei einer Temperatur zwischen 68°C und 72°C durchgeführt werden.

3. Verfahren nach einem der vorherigen Ansprüche, **dadurch gekennzeichnet, dass** in Schritt (b) die Temperatur auf die Temperatur von Schritt (b) erhöht wird nachdem ein erster Mischvorgang stattgefunden hat.

4. Verfahren nach einem der vorherigen Ansprüche, **dadurch gekennzeichnet, dass** das breiartige emulgierte homogene Vorkäsegemisch pasteurisiert wird.

5. Verfahren nach einem der vorherigen Ansprüche, **dadurch gekennzeichnet, dass** Schritt (b) und/oder Schritt (c) bei einer Schergeschwindigkeit von mehr als etwa 7500/sec durchgeführt werden und/oder
**dadurch gekennzeichnet, dass** Schritt (b) und/oder Schritt (c) bei einer Schergeschwindigkeit von weniger als etwa 40000/sec, vorzugsweise bei einer Schergeschwindigkeit von weniger als etwa 20000/sec und besonders bevorzugt bei einer Schergeschwindigkeit von etwa 10000/sec durchgeführt werden.

6. Verfahren nach einem der vorherigen Ansprüche, **dadurch gekennzeichnet, dass** Schritt (b) und/oder Schritt (c) durchgeführt werden und/oder die Temperatur erhöht wird bis eine Phasenumwandlung des Inhalts des Flüssigkeit-Feststoff-Mischers eintritt.

7. Verfahren nach einem der vorherigen Ansprüche, **dadurch gekennzeichnet, dass** Schritt (b) und/oder Schritt (c) wenigstens 10 Minuten lang, vorzugsweise wenigstens 20 Minuten lang und insbesondere etwa 30 Minuten lang durchgeführt werden.

8. Verfahren nach einem der vorherigen Ansprüche, **dadurch gekennzeichnet, dass** Schritt (b) und/oder Schritt (c) solange durchgeführt werden, bis das Käsevorprodukt weiß wird und es zu einem deutlichen Anstieg der Viskosität kommt, was durch eine Erhöhung des Stromverbrauchs des Mischers belegt wird.

9. Verfahren nach einem der vorherigen Ansprüche, **gekennzeichnet durch**:
(d) das Sterilisieren des breiartigen emulgierten homogenen Vorkäsegemischs.

10. Verfahren nach Anspruch 9, **dadurch gekennzeichnet, dass** das breiartige emulgierte homogene Vorkäsegemisch in Schritt (d) auf eine Temperatur von mehr als etwa 120°C erhitzt wird, vorzugsweise mehr als etwa 130°C und besonders bevorzugt auf eine Temperatur von etwa 140°C.

11. Verfahren nach Anspruch 9 oder 10, **dadurch gekennzeichnet, dass** in Schritt (d) das breiartige emulgierte homogene Vorkäsegemisch auf eine erste Hitzebehandlungstemperatur vorgeheizt wird und daraufhin auf die endgültige Hitzebehandlungstemperatur erhitzt wird.

12. Verfahren nach Anspruch 11, **dadurch gekennzeichnet, dass** die endgültige Hitzebehandlungstemperatur eine Temperatur von mehr als etwa 120°C, vorzugsweise von mehr als etwa 130°C und besonders bevorzugt eine Temperatur von etwa 140°C ist und/oder
**dadurch gekennzeichnet, dass** die erste Hitzebehandlungstemperatur eine Temperatur von mehr als 75°C, vorzugsweise von mehr als 80°C und besonders bevorzugt von etwa 85°C ist und/oder
**dadurch gekennzeichnet, dass** die erste Hitzebehandlungstemperatur eine Temperatur von weniger als 95°C, vorzugsweise von weniger als 90°C und besonders bevorzugt von etwa 85°C ist.

13. Verfahren nach Anspruch 11 oder 12, **dadurch gekennzeichnet, dass** in Schritt (d) das breiartige emulgierte homogene Vorkäsegemisch mittels eines Oberflächenwärmetauschers vorgeheizt wird, vorzugsweise mittels eines Schabeoberflächenwärmetauschers.

14. Verfahren nach Anspruch 9-13, **gekennzeichnet durch**:
(e) das Abkühlen des hitzebehandelten breiartigen emulgierten homogenen Vorkäsegemischs nach Schritt (d).

15. Verfahren nach Anspruch 14, **dadurch gekennzeichnet, dass** in Schritt (e) das breiartige emulgierte homogene Vorkäsegemisch mittels eines Wärmetauschers abgekühlt wird, vorzugsweise mittels eines Schabeoberflächenwärmetauschers oder blitzgekühlt wird mittels des Vakuumbehälters einer Infusionsanlage.

## Revendications

1. Procédé de fabrication de fromage comprenant les étapes suivantes :
(a) apport d'eau, de graisse et de poudres contenant des concentrés de protéines de lactosérum et de protéines laitières à teneur en lactose réduite dans un mélangeur solides-liquides,
(b) émulsion et homogénéisation du contenu du mélangeur solides-liquides,
(c) application d'une basse pression ou d'un vide dans l'espace interne du mélangeur,
dans lequel l'étape (b) et/ou l'étape (c) sont effectuées jusqu'à ce qu'un mélange de pré-fromage homogène émulsionné de type pâte soit obtenu ;
**caractérisé en ce que** l'étape (b) et/ou l'étape (c) sont effectuées à une température comprise entre 60°C et 85°C et à une vitesse de cisaillement supérieure à environ 5000/sec.

2. Procédé selon la revendication 1, **caractérisé en ce que** l'étape (b) et/ou l'étape (c) sont effectuées à une température comprise entre 62°C et 80°C, de préférence à une température comprise entre 64°C et 77°C, de préférence à une température comprise entre 65°C et 75°C, de préférence à une température comprise entre 67°C et 73°C, et de préférence à une température comprise entre 68°C et 72°C.

3. Procédé selon l'une quelconque des revendications précédentes, **caractérisé en ce que** dans l'étape (b), la température est augmentée jusqu'à la température de l'étape (b) après qu'un mélange initial a été effectué.

4. Procédé selon l'une quelconque des revendications précédentes, **caractérisé en ce que** le mélange de pré-fromage homogène émulsionné de type pâte est pasteurisé.

5. Procédé selon l'une quelconque des revendications précédentes, **caractérisé en ce que** l'étape (b) et/ou l'étape (c) sont effectuées à une vitesse de cisaillement supérieure à environ 7500/sec, et/ou
**caractérisé en ce que** l'étape (b) et/ou l'étape (c) sont effectuées à une vitesse de cisaillement inférieure à environ 40000/sec, de préférence à une vitesse de cisaillement inférieure à environ 20000/sec et de préférence à une vitesse de cisaillement inférieure à environ 10000/sec.

6. Procédé selon l'une quelconque des revendications précédentes, **caractérisé en ce que** l'étape (b) et/ou l'étape (c) sont effectuées et /ou que la température est augmentée jusqu'à ce qu'une conversion de phase du contenu du mélangeur solides-liquides ait lieu.

7. Procédé selon l'une quelconque des revendications précédentes, **caractérisé en ce que** l'étape (b) et/ou l'étape (c) sont effectuées pendant au moins 10 minutes, de préférence pendant au moins 20 minutes et de préférence pendant environ 30 minutes.

8. Procédé selon l'une quelconque des revendications précédentes, **caractérisé en ce que** l'étape (b) et/ou l'étape (c) sont effectuées jusqu'à ce que la base du fromage devienne blanche et qu'il y ait une augmentation notable de la viscosité, mise en évidence par une consommation accrue d'alimentation du mélangeur.

9. Procédé selon l'une quelconque des revendications précédentes, **caractérisé par** :
(d) la stérilisation du mélange de pré-fromage homogène émulsionné de type pâte.

10. Procédé selon la revendication 9, **caractérisé en ce que** le mélange de pré-fromage homogène émulsionné de type pâte est chauffé lors de l'étape (d) à une température supérieure à environ 120°C, de préférence supérieure à environ 130°C, et de préférence à une température d'environ 140°C.

11. Procédé selon les revendications 9 ou 10, **caractérisé en ce que** dans l'étape (d), le mélange de pré-fromage homogène émulsionné de type pâte est préchauffé à une température initiale de traitement thermique, puis chauffé à la température finale de traitement thermique.

12. Procédé selon la revendication 11, **caractérisé en ce que** la température finale de traitement thermique est une température supérieure à environ 120°C, de préférence supérieure à environ 130°C, et de préférence une température d'environ 140°C, et/ou
**caractérisé en ce que** la température initiale de traitement thermique est une température supérieure à 75°C, de préférence supérieure à 80°C, et de préférence d'environ 85°C, et/ou
**caractérisé en ce que** la température initiale de traitement thermique est une température inférieure à 95°C, de préférence inférieure à 90°C, et de préférence d'environ 85°C.

13. Procédé selon les revendications 11 ou 12, **caractérisé en ce que** dans l'étape (d), le mélange de pré-fromage homogène émulsionné de type pâte est préchauffé à l'aide d'un échangeur de chaleur à surface, de préférence à l'aide d'un échangeur de chaleur à surface raclée.

14. Procédé selon les revendications 9-13, **caractérisé par** :
(e) le refroidissement du mélange de pré-fromage homogène émulsionné de type pâte après l'étape (d).

15. Procédé selon la revendication 14, **caractérisé en ce que** dans l'étape (e), le mélange de pré-fromage homogène émulsionné de type pâte est refroidi à l'aide d'un échangeur de chaleur, de préférence à l'aide d'un échangeur de chaleur à surface raclée, ou réfrigéré à vide à l'aide de l'enceinte sous vide d'une chambre d'infusion.
